# FASCICULE DE BREVET EUROPEEN

(11) **EP 2 694 740 B1**
(45) Date de publication et mention de la délivrance du brevet: **20.05.2015**
(21) Numéro de dépôt: 12721328.8
(22) Date de dépôt: 05.04.2012
(51) Int. Cl.: E01H 1/08, A01G 1/12, A47L 5/14, F04D 29/54

(54) **SOUFFLEUR ELECTROPORTATIF AUTONOME A VITESSE DE SORTIE D'AIR MODULABLE**
EIGENSTÄNDIGER TRAGBARER ELEKTRISCHER BLÄSER MIT VARIABLER LUFTAUSTRITTSGESCHWINDIGKEIT
STANDALONE PORTABLE ELECTRIC BLOWER WITH VARIABLE AIR EXIT SPEED

(30) Priorité: 07.04.2011 FR 1101057
(43) Date de publication de la demande: 12.02.2014
(73) Titulaire: PELLENC (Société Anonyme), 84120 Pertuis (FR)
(72) Inventeur: PELLENC, Roger, F-84120 Pertuis (FR)
(74) Mandataire: Marek, Pierre
(86) Numéro de dépôt international: PCT/FR2012/000129
(87) Numéro de publication internationale: WO 2012/136906

(56) Documents cités:
- US-A- 4 288 886
- US-A- 4 945 604
- US-A- 6 076 231
- US-A- 6 105 206
- US-B1- 6 280 532

## Description

La présente invention concerne un souffleur électroportatif autonome à vitesse de sortie d'air modulable. Elle s'applique, en particulier aux appareils de ce genre destinés au balayage et/ou nettoyage, par soufflage d'air, de grandes surfaces telles que, par exemple, pelouses, voies de circulation urbaines, parkings extérieurs, aires de sport ou de jeux, etc. Le résultat obtenu par l'utilisation de ce matériel est analogue à celui atteint par l'usage d'un balai ou d'un râteau traditionnels, mais le travail est beaucoup moins fatiguant et incomparablement plus rapide. Dans cette application, l'utilisation d'une telle machine consiste à pousser les déchets jonchant le sol et disposés en partie sous des obstacles tels que des voitures en stationnement, pour former un tas ou andain qui est ensuite recueilli par une machine aspirante, une balayeuse ou une brosseuse. De tels appareils se présentent généralement sous la forme d'une unité portative tenue à la main et pouvant être supportée par un harnais. Ils sont utilisés, en pratique, en adaptant constamment la vitesse du flux d'air à l'état de la surface traitée. Ces appareils peuvent être conçus pour un usage professionnel et aussi pour une utilisation domestique.

De tels appareils comprennent principalement, un conduit de guidage d'air comportant une partie proximale d'entrée d'air ou tuyère d'aspiration, une partie distale de sortie d'air ou tuyère d'échappement, et un dispositif de soufflage d'air disposé à l'intérieur de la partie intermédiaire du conduit. Ce dispositif de soufflage d'air assure une aspiration d'air et son refoulement sous forme d'un flux d'air caractérisé par un débit d'air et une vitesse de l'air en sortie de l'appareil.

La soufflante ou le dispositif de soufflage d'air des appareils connus est entraîné par un moteur thermique ou par un moteur électrique universel à balais. Elle est constituée la plupart du temps par une turbine centrifuge. Les appareils existants fonctionnant avec un moteur thermique sont lourds (poids supérieurs à 4,5 kg en ordre de marche), encombrants, bruyants (bruit supérieur à 100 dB), polluants (utilisation de carburant) et générant un effet gyroscopique important dans les variations de régime compte tenu de la variété de pièces techniques tournantes et de leur inertie importante due à leur poids. Les appareils utilisant un moteur électrique sont le plus souvent alimentés à partir du réseau électrique via un câble d'alimentation, ou sont réalisés sous forme de petites soufflantes alimentées par des batteries mais ayant une faible capacité. De tels appareils électriques sont, de ce fait, utilisés plutôt pour des applications domestiques, mais ne peuvent pas être utilisés pratiquement par des professionnels pour le traitement d'espaces publics ou de grandes surfaces, du fait de leur faible autonomie.

Les souffleurs portatifs actuellement disponibles sur le marché utilisent généralement des turbines centrifuges. De tels souffleurs ont notamment pour inconvénients :
- un bruit très important en fonctionnement (> 100 dB de façon générale) obligeant l'utilisateur à porter un casque antibruit, et, dans le cadre d'utilisation en milieu urbanisé, à limiter leur utilisation, en cours de journée, aux heures les moins gênantes pour les riverains ;
- un poids important (> 4,5kg) engendrant une pénibilité supplémentaire pour l'utilisateur ;
- un encombrement important des moteurs thermiques ou électriques utilisés pour faire tourner la turbine centrifuge.

D'autres inconvénients notables de ces moteurs résultent du fait que :
- ils ne peuvent tourner à vitesse élevée (généralement la vitesse de rotation est inférieure à 12 000 tr/min) ;
- les turbines centrifuges ayant, de conception, un diamètre relativement important (du même ordre de grandeur que l'encombrement du moteur en général), présentent des vitesses d'air importantes en périphérie de turbine et génèrent des bruits aérauliques importants en conséquence ;
- la conception de tels appareils devant présenter un faible coût de revient ne permet pas de réaliser des turbines très performantes, ce qui limite le rendement de l'appareil et en augmente le bruit par la génération de perturbations aérodynamiques dans la turbine et à ses extrémités ;

- l'ensemble des pièces tournante possède un moment d'inertie élevé rendant difficile des modulations rapides du débit et de la vitesse d'air en sortie de souffleur afin d'adapter rapidement le fonctionnement de l'outil à la configuration de la surface traitée ou à l'état des déchets à balayer (en condition sèche ou mouillée) ;
- la masse des pièces en rotation, génère un effet gyroscopique important entraînant des torsions du poignet de l'utilisateur ;
- il est très difficile pour ces appareils de descendre en dessous d'un rapport Poids/Puissance inférieur à 5 kg/kW en ordre de marche.

Dans le document US-6 105 206 est décrit un appareil de soufflage d'air électrique et portable avec les caractéristiques du préambule de la revendication 1 constitué par un tube support allongé dont l'extrémité proximale est munie d'une poignée de commande et dont l'extrémité distale supporte les organes actifs de l'appareil comprenant un moteur électrique, un ventilateur ou compresseur, des redresseurs d'air. Ces organes sont logés dans un conduit disposé concentriquement autour de l'extrémité distale du tube-support, ce conduit comportant une entrée d'air et une sortie d'air. Il est prévu que ledit conduit soit préférablement réalisé dans une matière plastique moulable d'un type couramment utilisé pour le moulage d'objet rigide divers et non pas de matière plastique spéciale, c'est-à-dire dans un matériau ne présentant pas des propriétés de conductivité thermique. Le montage, aux extrémités opposées du tube-support de la poignée de commande et de la tête de soufflage de l'appareil rend le travail très difficile et pénible, en raison des efforts permanents que doivent fournir les opérateurs pour s'opposer à la tendance de ladite tête de soufflage à basculer vers le bas, malgré l'utilisation d'une bretelle de portage. En outre, la réalisation du conduit de soufflage dans un matériau isolant, ne permet pas d'obtenir une dissipation de la chaleur générée par le fonctionnement du moteur et du ventilateur.

Dans le document US-4.945.604 est décrit un souffleur portable dont le moteur, le ventilateur et des redresseurs d'air sont installés dans l'extrémité proximale d'un tube, laquelle est, d'autre part, munie d'une poignée de portage. Il est précisé que le tube est réalisé par un procédé de montage par injection ce qui sous entend qu'il est exécuté en matière plastique d'un type couramment utilisé pour le moulage d'objet rigide divers et non pas de matière plastique spéciale, c'est-à-dire dans un matériau ne présentant pas des propriétés de conductivité thermique.

Dans ces conditions, la portion proximale du tube dans laquelle sont logés les organes actifs du souffleur n'exerce aucune fonction de dissipation de la chaleur produite par le fonctionnement du moteur et du ventilateur.

L'invention vise notamment à mettre à la disposition des utilisateurs un souffleur électroportatif silencieux, léger, bien équilibré, exempt d'effet d'inertie ou d'effet gyroscopique contrariant la tenue de l'appareil, en cours de fonctionnement et éliminant les effets de pénibilité d'utilisation de tels outils, voire les risques traumatiques dans le temps au niveau des poignets. Il faut considérer que l'outil est parfois porté par l'opérateur pendant plusieurs heures, de sorte que cet outil, qui est sensé soulager l'utilisateur peut provoquer de plus grandes douleurs musculaires que l'emploi d'un râteau si le poids de l'outil est trop important.

Un autre but de l'invention est la réalisation d'un souffleur électroportatif au fonctionnement peu bruyant, de construction simple, comportant des moyens de modulation rapide du débit et de la vitesse du flux d'air en sortie de l'appareil, ce flux d'air étant orienté et structuré.

Selon l'invention, cet objectif est réalisé par un souffleur électroportatif autonome comportant au moins une hélice axiale génératrice d'un flux d'air et entrainée par un moteur électrique alimenté par une source de courant, ledit souffleur comprenant un conduit de guidage d'air constitué d'une succession de trois parties tubulaires de forme générale cylindrique, à savoir une partie proximale ou tuyère d'aspiration munie d'une entrée d'air, une partie distale de sortie d'air ou tuyère d'échappement et une partie centrale ou intermédiaire, étant la partie centrale une pièce distincte des deux autres et est agencée pour constituer un ensemble fonctionnel, monobloc ou formé d'un assemblage d'une pluralité d'éléments et réalisés dans un matériau bon conducteur de chaleur, ledit ensemble comporte les sous-ensembles fonctionnels suivants :
- un moteur électrique à commutation électronique ;
- au moins une hélice axiale entraînée en rotation par le moteur électrique ;
- des redresseurs d'air ;
- une carte électronique de gestion de l'outil et de commande du moteur,
ledit ensemble fonctionnel étant logé dans la partie centrale ou intermédiaire dudit conduit de guidage d'air avec laquelle il se trouve en contact.

Selon une disposition caractéristique avantageuse, l'ensemble fonctionnel comporte encore les sous-ensembles fonctionnels suivant :
- un cône aérodynamique d'entrée d'air disposé coaxialement en amont de l'hélice ; et/ou
- un cône aérodynamique de sortie d'air disposé coaxialement en aval du moteur électrique.

Selon un mode d'exécution préféré, l'ensemble fonctionnel central comprend également un passage logeant le ou les câbles électriques du moteur reliant la carte électronique et le moteur électrique.

On comprend qu'un avantage important de l'invention est de rassembler tous les éléments nécessaires aux fonctions de l'outil dans la partie centrale de celui-ci. Cette organisation permet en particulier de réaliser trois fonctions: la fonction de support mécaniques pour tous les éléments nécessaires aux fonctions de l'outil ; la fonction de redresseur du flux d'air généré par l'hélice ; la fonction d'échangeur thermique permettant une bonne dissipation de la chaleur générée par le moteur et la carte électronique et permet facilement des tests fonctionnels avant le montage complet de l'appareil.

Selon un mode d'exécution intéressant, ladite tuyère d'aspiration présente, en amont du ventilateur axial, un coude dont l'extrémité proximale délimitant l'entrée d'air est orientée vers le bas, en considérant une position de travail du souffleur selon laquelle, celui-ci est dirigé vers l'avant et la poignée de manoeuvre du souffleur est placée au-dessus de celui-ci.

Selon un mode de réalisation avantageux, la poignée de manoeuvre du souffleur est placée au dessus de la partie centrale agencée pour constituer l'ensemble fonctionnel, préférentiellement positionnée au dessus du centre de gravité (G) de l'appareil, en considérant une position de travail du souffleur selon laquelle, celui-ci est dirigé vers l'avant.

La poignée de manoeuvre incorpore de plus les organes de commande de l'appareil, à savoir une gâchette, une carte électronique secondaire ayant pour fonction d'analyser la position de ladite gâchette, ainsi qu'un sélecteur de vitesse d'air et un dispositif d'affichage de cette vitesse gérés par ladite carte électronique secondaire de façon à ce que la position de ladite gâchette définisse une vitesse d'air proportionnelle à la vitesse maximum réglée par le sélecteur, en liaison avec la carte de commande de gestion de l'outil et de pilotage du moteur. Elle comprend aussi la liaison avec le câble électrique d'alimentation relié à une batterie. Ce câble comporte à son extrémité le connecteur de liaison amovible avec le pack batterie porté par l'utilisateur ou avec l'alimentation électrique extérieure, et peut incorporer, en outre, un connecteur rapide de connexion/déconnexion de l'outil permettant à l'utilisateur de libérer, rapidement, l'outil de sa liaison avec ladite batterie.

Selon un mode de réalisation avantageux, la poignée de commande est réalisée en deux demi coques aptes, une fois assemblées, à assurer une fixation rapide de l'ensemble des éléments de l'outil entre eux mais aussi à assurer la forme design définitive de l'outil. Elle sera complétée par un carter adapté à la fois à la coque de l'outil et recouvrant la carte électronique afin de la protéger mais aussi de prévoir son inspection pour maintenance, le cas échéant, sans démonter l'ensemble de l'outil.

Outre les qualités recherchées et obtenues par le souffleur électroportatif présentant les caractéristiques ci-dessus, celui-ci a encore pour avantages :
- un encombrement très réduit de l'outil autour du conduit de guidage d'air ;
- un poids réduit (2.6 kg) ;
- un bruit considérablement réduit (< 95 dB) ;
- une vitesse de rotation élevée de l'hélice axiale (> 20000 tr/min) favorisant son rendement afin d'augmenter la durée d'utilisation pour une charge de batterie ;
- un rapport Poids/Puissance très faible (3.5 kg/kW) ;
- une simplicité d'assemblage de ses différents éléments constitutifs ;
- un fonctionnement de l'appareil de façon fiable sur plusieurs heures d'utilisation journalière ;
- la puissance d'un appareil de telle conception pouvant aisément atteindre 2 kW.

Dans d'autres domaines, tels que aéromodélisme, aération des bâtiments, refroidissement de systèmes électroniques, pulvérisation, voire aérage des galeries de mines, sont connus des appareils conçus pour générer des flux d'air à partir de ventilateurs axiaux tels que le brevet US-2006/0.237.168 qui décrit un appareil de ventilation comprenant :
- un logement ou carter ;
- un ventilateur constitué de pâles entraînées en rotation par un moteur et disposé dans ledit logement, et,
- une pluralité d'aubes de guidage fixées à l'intérieur dudit logement, lesdites aubes de guidage étant thermiquement couplées à un composant électronique par l'intermédiaire d'un caloduc, de telle sorte que la chaleur générée par le composant électronique est transférée, à travers lesdites aubes de guidage, dans un flux d'air généré par la rotation de la pluralité de pâles du ventilateur.

Selon ce document, le dispositif de soufflage est constitué par l'assemblage de plusieurs pièces à savoir : le carter extérieur, le carter du moteur du ventilateur, les aubes de guidage du flux d'air et le support du composant électronique. Notamment, le composant électronique est relié aux aubes de guidage par l'intermédiaire d'autres composants de type caloduc ou conducteur de chaleur. Il en résulte un faible niveau d'évacuation de la chaleur générée par le moteur du ventilateur et par le composant électronique.

Les appareils de ce genre sont, en pratique, dédiés au refroidissement de composants électroniques tel que décrit dans le brevet US-2006/0.237.169, où les fonctions de refroidissement prédominent sur la génération d'un flux d'air important mieux adapté au soufflage. Ces appareils fonctionnent en outre de façon fixe avec une alimentation au réseau de faible puissance (inférieure ou assez proche de 100 W en général) mais de façon continue avec peu ou pas de besoin de modulation des débits et vitesses d'air.

On trouve aussi des ventilateurs de ce type beaucoup plus puissants (plusieurs dizaines de kW parfois), notamment dans l'aérage des mines tel que décrit dans le document FR-2.603.350 mais ce sont des systèmes fixes, lourds et toujours alimentés sur le réseau dont les carters extérieur et intérieur et les aubes radiales reliant lesdits carters sont constitués par plusieurs pièces assemblées lors du montage du ventilateur, ce qui, outre l'inconvénient mentionné ci-dessus, influe défavorablement sur le coût des appareils.

Selon un autre objectif important, l'invention vise à fournir un dispositif de soufflage d'air léger et compact, très performant, de construction simple et économique, générant une faible inertie et un effet gyroscopique quasi inexistant, un flux d'air pulsé à vitesse élevée possédant un excellent rendement aéraulique de façon à augmenter considérablement l'autonomie d'un appareil alimenté à partir d'une batterie, par exemple une batterie Lithium-Ion ou Lithium-Polymère de forte capacité, et ne possédant pas de dispositif de refroidissement autre que les composants strictement nécessaires à la génération du flux d'air.

Le deuxième objectif précité est réalisé au moyen d'un dispositif de soufflage d'air selon la revendication 1 (cf. rev. 7) qui est notamment remarquable en ce qu'il comprend d'une part, un carter extérieur de forme générale cylindrique, un carter cylindrique intérieur de diamètre plus réduit et disposé axialement dans ledit carter extérieur, lesdits carters extérieur et intérieur étant reliés par des ailettes radiales aptes à redresser le flux d'air de l'hélice, couramment appelées redresseurs, délimitant une pluralité de canaux de circulation d'air de refroidissement disposés entre lesdits carters et s'étendant parallèlement à l'axe de ces derniers et, d'autre part, un ventilateur axial dont l'hélice est entraînée en rotation par un moteur électrique logé dans le carter intérieur, ce dispositif étant notamment remarquable en ce que le carter extérieur, le carter intérieur et les redresseurs reliant lesdits carters sont réalisés d'une seule pièce dans un matériau bon conducteur de chaleur, par exemple en aluminium ou autre métal, en matière composite ou en matière plastique possédant de bonne qualité de conductivité thermique.

Selon un mode d'exécution très avantageux, le carter extérieur est muni d'une platine en contact avec ledit carter extérieur et sur laquelle est fixée une carte électronique destinée à assurer la gestion du fonctionnement d'une souffleuse électroportative ou appareil analogue incluant un tel dispositif.

Selon une autre importante disposition caractéristique, cette platine de réception de la carte électronique est réalisée d'une seule pièce avec l'ensemble constitué par le carter extérieur, le carter intérieur et les redresseurs.

Selon une autre disposition caractéristique avantageuse, les pales de l'hélice axiale et les ailettes de redressement sont courbées en sens inverse.

Selon un mode d'exécution intéressant, les redresseurs et les canaux de circulation d'air ont une longueur correspondant sensiblement à la longueur du carter intérieur renfermant le moteur du ventilateur axial.

Selon un autre mode d'exécution intéressant, l'ensemble monobloc constitué par le carter extérieur, le carter intérieur, les redresseurs et la platine supportant la carte électronique, est exécuté en magnésium.

L'ensemble constitué par le carter extérieur, le carter intérieur, les redresseurs et la platine supportant la carte électronique est obtenu, en une seule pièce, par un procédé de moulage ou par un procédé d'injection de précision.

Outre le fait qu'il possède effectivement les qualités recherchées précédemment indiquées, le dispositif de soufflage d'air revendiqué a encore pour avantages une robustesse permettant d'envisager un fonctionnement durable, une facilité d'exécution des opérations de tests lors du montage, de maintenance ou de réparation, une réduction du nombre de pièces constitutives et de l'encombrement. Les redresseurs reliant le carter extérieur et le carter intérieur permettent de redresser le flux d'air tout en permettant un transfert de la chaleur emmagasinée par le carter intérieur renfermant le moteur du ventilateur axial en assurant également une circulation d'air de refroidissement autour dudit carter intérieur, de façon à assurer un équilibre thermique optimum de l'ensemble du fait de la vitesse d'air importante générée par l'hélice.

D'autre part, une partie de la chaleur produite par la carte électronique est transférée au carter extérieur, voire aux redresseurs, via la platine supportant ladite carte électronique, ce qui assure le refroidissement de cette dernière.

On remarque ici que la fonction de refroidissement des composants de l'appareil n'utilise pas d'autres pièces que celles servant à assurer la fonction principale de l'outil.

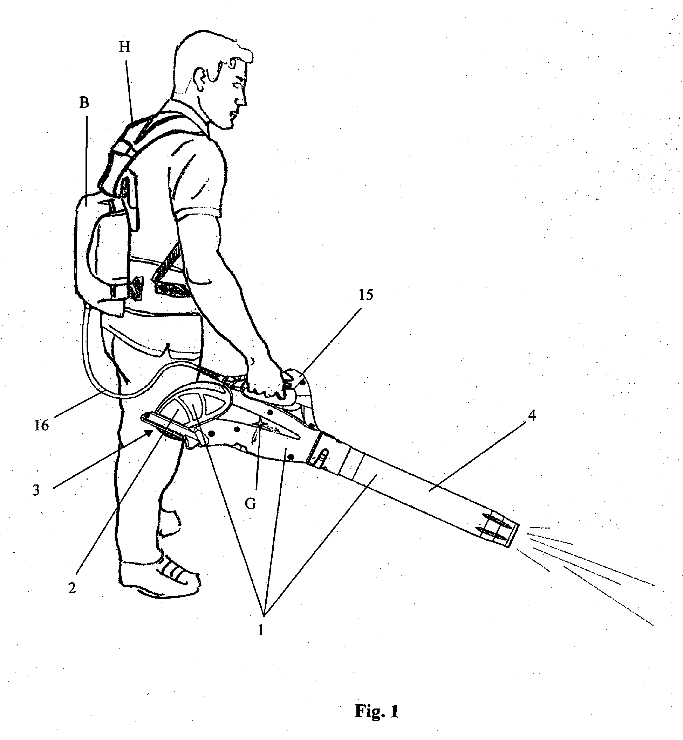

Les buts, caractéristiques et avantages ci-dessus, et d'autres encore, ressortiront mieux de la description qui suit et des dessins annexés, dans lesquels :
Là figure 1 montrant un souffleur électroportatif tenu par un utilisateur et alimenté par une batterie portée dans le dos de ce dernier, via un cordon électrique de raccordement.

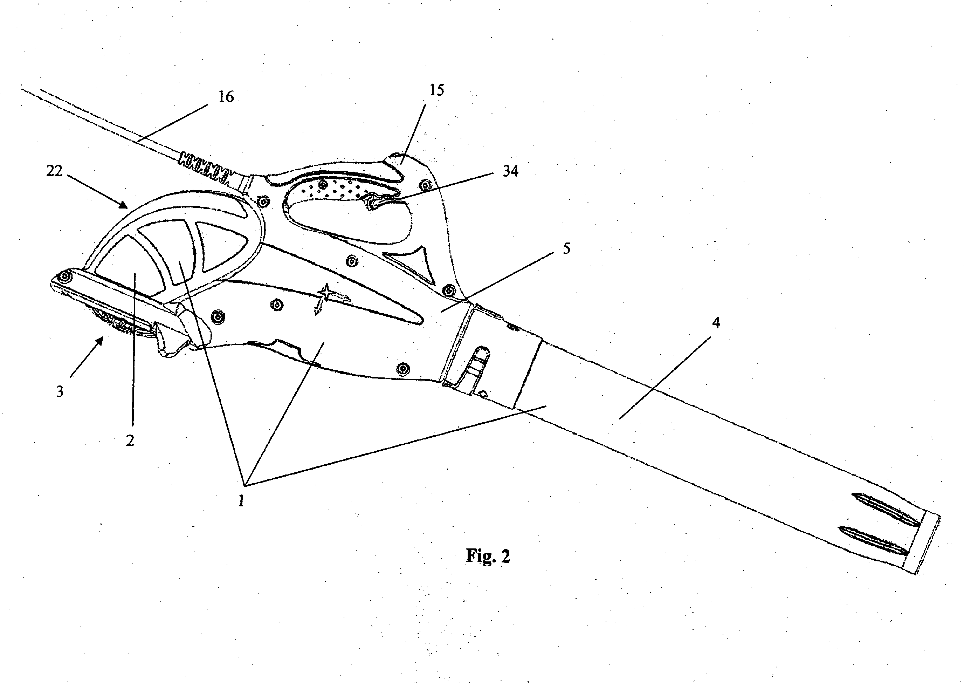

La figure 2 est une vue extérieure et à plus grande échelle de ce souffleur.

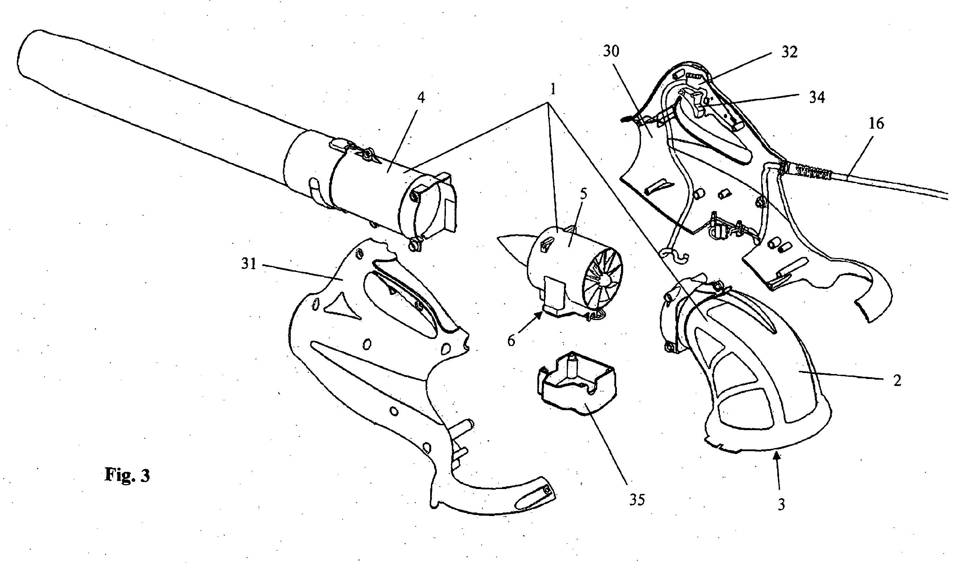

La figure 3 est une vue en perspective éclatée du souffleur électroportatif.

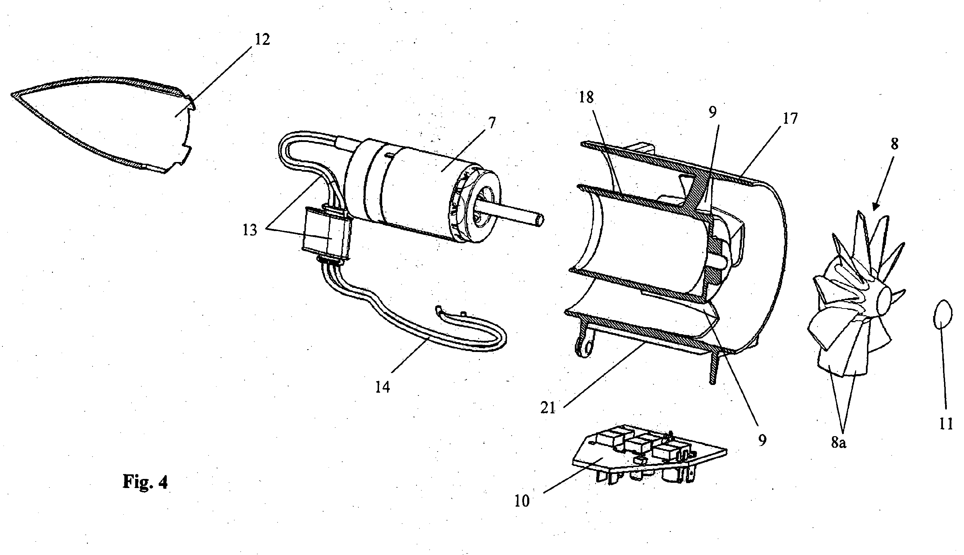

La figure 4 est une vue de détail en perspective éclatée avec coupes partielle du dispositif de soufflage d'air logé dans la partie centrale du souffleur.

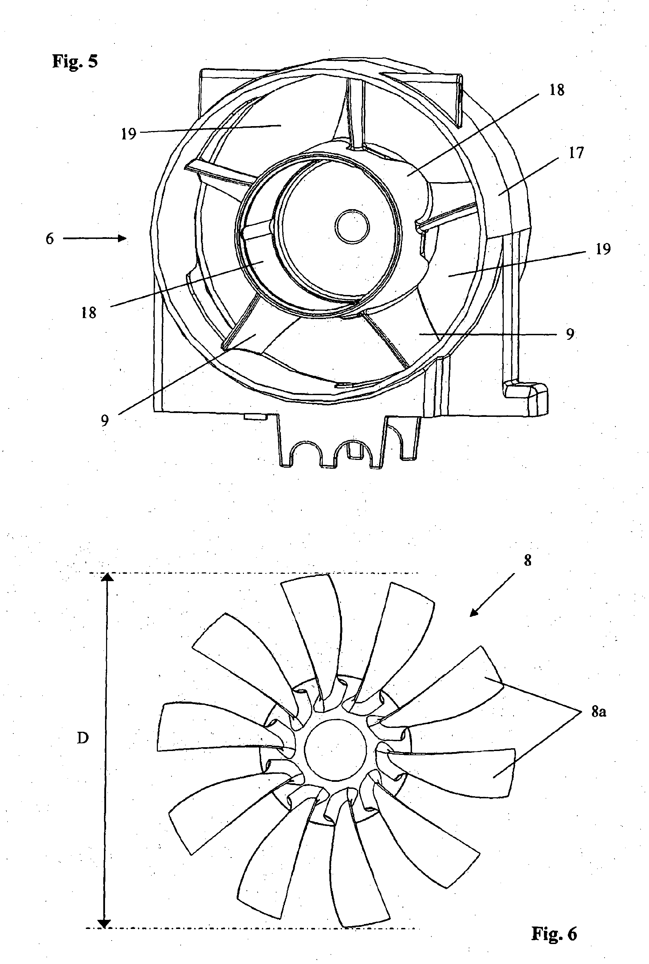

La figure 5 est une vue de détail arrière, en perspective et à plus grande échelle, illustrant l'ensemble monobloc représenté sans le ventilateur axial.
La figure 6 est une vue de face et à plus grande échelle de l'hélice de ce ventilateur axial.

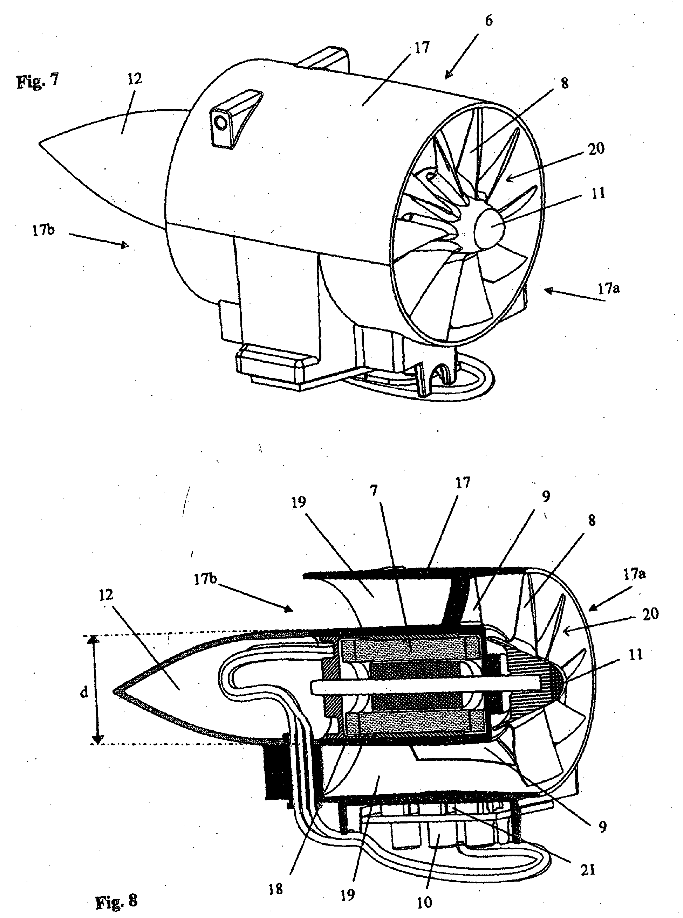

La figure 7 est une vue en perspective, d'un exemple de réalisation d'un dispositif de soufflage d'air selon l'invention.
La figure 8 est une vue en coupe axiale de ce dispositif.

On se reporte auxdits dessins pour décrire des exemples de réalisation intéressants, quoique nullement limitatifs, du dispositif de soufflage d'air et d'une souffleuse électroportative en faisant application.

Le souffleur représenté, comprend principalement un conduit 1 de guidage d'air constitué d'une succession de trois parties tubulaires de forme générale cylindrique, à savoir une partie proximale ou tuyère d'aspiration 2 munie d'une entrée d'air 3, une partie distale de sortie d'air ou tuyère d'échappement 4 et une partie centrale ou intermédiaire 5 est une pièce distincte des deux autres disposée entre lesdites parties proximale et distale. Dans cette partie centrale est logé un ensemble fonctionnel désigné globalement par la référence 6, monobloc ou formé d'un assemblage d'une pluralité d'éléments et réalisé dans un matériau bon conducteur de chaleur, ledit ensemble comporte les sous-ensembles fonctionnels suivants :
- un moteur électrique à commutation électronique 7, couramment appelé moteur brushless ;
- au moins une hélice axiale 8 entraînée en rotation par le moteur électrique ;
- des redresseurs d'air 9 ;
- une carte électronique 10 de gestion de l'outil et de commande du moteur,
ledit ensemble fonctionnel étant logé dans la partie centrale ou intermédiaire dudit conduit de guidage d'air avec laquelle il se trouve en contact.

De manière avantageuse, l'ensemble fonctionnel comporte encore les sous-ensembles fonctionnels suivant :
- un cône aérodynamique d'entrée d'air 11 disposé coaxialement en amont de l'hélice ; et/ou
- un cône aérodynamique de sortie d'air 12 disposé coaxialement en aval du moteur électrique, et permettant d'éviter l'apparition de turbulences dans le flux d'air.

De préférence, l'ensemble fonctionnel central 6 comprend un passage 13 situé principalement dans le courant d'air et logeant le ou les câbles électriques 14 reliant la carte électronique 10 et le moteur électrique 7, afin d'assurer la protection de ce ou de ces câbles. Ce passage peut être constitué par une gaine spécifique, ou ménagé dans l'un des redresseurs 9, ou dans une ailette prévue à cet effet.

Selon un mode d'exécution intéressant, ladite tuyère d'aspiration 2 présente, en amont de l'ensemble fonctionnel 6, un coude 22 dont l'extrémité proximale délimitant l'entrée d'air 3 est orientée vers le bas, en considérant une position de travail du souffleur selon laquelle, celui-ci est dirigé vers l'avant et la poignée de manoeuvre 15 du souffleur est placée au-dessus de celui-ci.

Selon un mode de réalisation avantageux, la poignée de manoeuvre 15 du souffleur est placée au dessus de la partie centrale renfermant l'ensemble fonctionnel 6, en considérant une position de travail du souffleur selon laquelle, celui-ci est dirigé vers l'avant (figure1) et positionnée sensiblement au dessus du centre de gravité G.

Selon un mode de réalisation, la poignée 15 est constituée par l'assemblage de deux demi coques 30 et 31, et elle incorpore les actionneurs de commande de l'outil, comportant notamment une carte électronique secondaire 32, reliée à la carte électronique de gestion de l'outil et de commande du moteur 10. Cette carte électronique secondaire 32 est configurée pour analyser la position de la gâchette 34 commandant le fonctionnement et l'arrêt de l'outil, afin de moduler la vitesse de l'air en sortie de l'appareil proportionnellement à la position de ladite gâchette ; l'objectif étant d'obtenir un dosage progressif et précis du flux d'air.

Le système de mesure de la position de la gâchette 34 utilise un aimant à champ orienté fixé sur ladite gâchette (partie mobile) associé à un capteur magnéto résistif placé sur la carte électronique secondaire 32 (partie fixe). Concernant l'exposé d'un tel système, il est renvoyé à la description et aux dessins du brevet français publié sous le numéro 2.935.175.

Pour compléter la modulation de l'air en sortie de l'appareil, la carte électronique secondaire 32 comporte un sélecteur de vitesse et un dispositif d'affichage de la vitesse sélectionnée limitant la vitesse maximale de l'air en sortie de l'appareil à la sélection retenue, l'objectif étant d'aider l'utilisateur à réduire la consommation en adaptant au mieux la plage de vitesses disponible. Les différents modes ou plages de vitesses sélectionnés décalent la limite haute de fréquence du moteur (par exemple, la plage de vitesse 1 correspond à une fréquence de 0 à 15 400 tr/min, la plage de vitesse 4 correspond à une fréquence de 0 à 21 300 tr/min). Le changement de vitesse se fait par impulsion , sur le bouton de sélection approprié. Un capteur à effet Hall également présent sur la carte électronique secondaire 32 (partie fixe) fonctionne ici en « tout ou rien », c'est-à-dire en non progressif. Il détecte ainsi un éloignement ou un rapprochement du champ magnétique de l'aimant fixé sur le bouton ou autre organe de commande (partie mobile) de ce sélecteur. Un traitement informatique du signal détecté permet également de définir si l'appui sur le bouton est bref ou maintenu, et le cas échéant, une cinquième plage de vitesse est engagée par cet appui maintenu afin de délivrer plus de puissance.

Les deux demi coques (30 et 31) constituant la poignée 15 sont, par ailleurs, aptes, une fois assemblées, à autoriser une fixation rapide de l'ensemble des éléments de l'outil entre eux (partie proximale 2, partie centrale 5, et partie distale 4) et aussi à assurer la forme spécifique définitive de l'outil. La fermeture de la coque est complétée par un carter 35 adapté à la forme de l'outil et recouvrant la carte électronique 10 afin de la protéger et permettant aussi son inspection pour maintenance, le cas échéant, sans démonter l'ensemble de l'outil.

Selon un mode de réalisation, le souffleur électroportatif configuré de la manière exposée précédemment peut être équipé d'un anneau ou autre organe d'accrochage permettant de le suspendre à un harnais H porté par l'utilisateur.

D'autre part, le moteur électrique 7 peut être alimenté soit par une batterie B insérée dans le souffleur, soit par l'intermédiaire d'un câble électrique 16 équipé d'un moyen de connexion à une source de courant (prise de courant du convertisseur secteur ou batterie portée par l'utilisateur).

Selon une autre disposition caractéristique importante, l'ensemble fonctionnel 6 logé dans la partie centrale 5 comprend un carter extérieur 17 de forme générale cylindrique, un carter cylindrique intérieur 18 de diamètre d plus réduit et disposé axialement dans ledit carter extérieur, lesdits carter extérieur 17 et intérieur 18 étant reliés par des ailettes radiales communément appelées redresseurs 9. Ces redresseurs délimitent une pluralité de canaux 19 de circulation d'air de refroidissement disposés entre les carters extérieur 17 et intérieur 18 et autour de ce dernier. Ils s'étendent longitudinalement entre lesdits carters extérieur 17 et intérieur 18.

Le carter extérieur 17 présente des extrémités proximale et distale ouvertes constituant respectivement une entrée d'air 17a et une sortie d'air 17b.

L'ensemble constitué par le carter extérieur 17, le carter intérieur 18 et les redresseurs 9 est réalisé d'une seule pièce dans un matériau bon conducteur de chaleur, par exemple en magnésium, ou en aluminium, voire en matières composites ou plastiques, possédant cette propriété. Cet ensemble monobloc peut être obtenu par un procédé de moulage ou par un procédé d'injection de précision connu en soi.

L'ensemble fonctionnel 6 logé dans la partie centrale 5 se trouve en contact avec la paroi interne de celle-ci.

Dans cet ensemble, est logé un ventilateur axial 20, constitué par l'hélice 8 et le moteur 7, dont l'hélice 8 est disposée dans la partie proximale du carter extérieur 17 et dont le moteur électrique 7 assurant la rotation de ladite hélice est renfermé dans le carter intérieur 18 lequel présente une longueur inférieure à celle du carter extérieur 17.

L'hélice 8 a un diamètre D à peine inférieur au diamètre interne de l'entrée 17a du carter extérieur 17 dans laquelle elle est logée, de façon à pouvoir tourner, dans ce dernier, sans frottements.

Les redresseurs 9 et les canaux 19 de circulation d'air délimités par ces redresseurs peuvent avoir une longueur correspondant sensiblement à la longueur du carter 18 renfermant le moteur électrique 7 du ventilateur axial 20. Ils pourraient cependant présenter une longueur inférieure à celle du carter intérieur 18, par exemple, ils pourraient avoir une longueur égale à la longueur de la corde des pales 8a de l'hélice 8.

En outre, l'ensemble fonctionnel 6 comprend un cône aérodynamique d'entrée d'air 11 disposé coaxialement en amont de l'hélice 8, et/ou un cône aérodynamique de sortie d'air 12 disposé coaxialement en aval du moteur électrique 7, dans le prolongement du carter intérieur 18. La longueur du cône aérodynamique de sortie d'air 12 est nettement supérieure à celle du cône aérodynamique d'entrée d'air 11. Par exemple, il présente une longueur supérieure à son diamètre.

Avantageusement, les pales 8a de l'hélice axiale 8 et les redresseurs 9 sont courbées en sens inverse, ce qui permet d'obtenir un bon rendement aéraulique.

Le carter intérieur 18 dans lequel est logé le moteur électrique 7 du ventilateur axial 20 est disposé en aval de l'hélice constituée par l'ensemble de pâles 8a, en considérant le sens de déplacement du flux d'air généré par ledit ventilateur. D'autre part, ladite hélice 8 présente un diamètre D supérieur au diamètre d du carter intérieur 18.

Les redresseurs 9 permettent dé redresser le flux d'air pulsé en amont du ventilateur axial 20 et assurent le transfert d'une partie de la chaleur emmagasinée par le carter intérieur 18 renfermant le moteur électrique 7 du ventilateur axial 20 vers le carter extérieur 17. Le flux d'air produit par le ventilateur axial 20 participe efficacement au refroidissement des parois du cylindre extérieur 17, du cylindre intérieur 18 et des ailettes radiales 9 de redressement dudit flux d'air, avec lesquels ce dernier se trouve en contact.

Le dispositif de soufflage d'air comportant les caractéristiques précédemment décrites permet d'obtenir un flux d'air en sortie de l'outil avec une vitesse et un débit importants, moyennant un moteur capable d'assurer une vitesse de rotation supérieure à 20 000 tr/min.

La réalisation en une seule pièce de cet ensemble permet d'assurer le bon équilibre de ce dernier par conduction et rayonnement thermique dans le flux d'air généré par l'hélice 8 du ventilateur 20, son mode de réalisation permet.aussi d'obtenir un état de surface limitant les pertes de charges du flux d'air qui le traverse.

L'ensemble monobloc 17-18-9 est usiné pour assurer un centrage idéal des parties constitutives du ventilateur axial 20 de sorte à réduire ainsi le jeu de l'hélice en bout de pâles pour augmenter le rendement aérodynamique et réduire le bruit.

Selon une autre disposition caractéristique avantageuse, le carter extérieur cylindrique 17 est muni, extérieurement, d'une platine ou embase 21 sur laquelle est fixée une carte électronique 10 configurée pour assurer la gestion ou pilotage du moteur du dispositif de soufflage d'air d'un souffleur électroportatif ou appareil analogue incluant le dispositif de soufflage d'air revendiqué. Cette commande électronique du moteur permet d'assurer son fonctionnement optimum dans tous ses régimes de fonctionnement (continus et transitoires), via des organes de commande (gâchette, limiteur de puissance).

La carte électronique permet d'obtenir des changements de régime c'est-à-dire de moduler la vitesse d'air en sortie de l'outil, de façon plus ou moins fréquente, afin d'adapter ceux-ci à la configuration de la surface traitée notamment lorsque les surfaces à traiter sont difficilement accessibles (c'est par exemple le cas des surface se trouvant sous les voitures en stationnement sur les voies urbaines), ou à l'état des feuilles (sèches ou mouillées) ou autres déchets à balayer.

Selon une autre disposition caractéristique importante, la platine 21 de réception de la carte électronique 10 est réalisée d'une seule pièce avec l'ensemble constitué par le carter extérieur 17, le carter intérieur 18 et les redresseurs 9.

La fixation de la carte électronique 10 sur un support ou platine 21 solidaire du carter extérieur 17 permet une bonne dissipation de la chaleur générée par ladite carte électronique.

On observe que, selon l'invention, tous les éléments nécessaires aux fonctions de l'outil sont rassemblés dans la partie centrale de celui-ci.

Ceci procure plusieurs avantages intéressants, notamment de participer au bon équilibrage du souffleur, permettre le montage et l'entretien aisés, et la possibilité d'opérer facilement des tests fonctionnels sur ladite partie centrale avant le montage complet et définitif de l'appareil.

## Revendications

1. Souffleur électroportatif autonome, comportant au moins une hélice (8) génératrice d'un flux d'air et entrainée par un moteur électrique alimenté par une source de courant, ledit souffleur comprenant un conduit de guidage d'air (1) constitué d'une succession de trois parties tubulaires de forme générale cylindrique, à savoir une partie proximale ou tuyère d'aspiration (2) munie d'une entrée d'air (3), une partie distale de sortie d'air ou tuyère d'échappement (4) et une partie centrale ou intermédiaire (5), ladite partie centrale comportant les sous-ensembles fonctionnels suivants logés dans ladite partie centrale (5) dudit conduit de guidage d'air (1) :
- un moteur électrique à commutation électronique (7) ;
- au moins une hélice axiale (8) entraînée en rotation par le moteur électrique et constituant, avec ce dernier, un ventilateur axial (20) ;
- des redresseurs d'air (9) ;
- une carte électronique (10) de gestion de l'outil et de commande du moteur,
ledit ensemble fonctionnel étant logé dans la partie centrale ou intermédiaire dudit conduit de guidage d'air avec laquelle il se trouve en contact **caractérisé en ce que** la partie centrale est une pièce distincte des deux autres et est agencée pour constituer un ensemble fonctionnel (6), monobloc ou formé d'un assemblage d'une pluralité d'éléments et réalisé dans un matériau bon conducteur de chaleur.

2. Souffleur électroportatif selon la revendication 1, **caractérisé en ce que** l'ensemble fonctionnel (6) comporte encore les sous-ensembles fonctionnels suivants :
- un cône aérodynamique d'entrée d'air (11) disposé coaxialement en amont de l'hélice (8) ; et/ou
- un cône aérodynamique de sortie d'air (12) disposé coaxialement en aval du moteur électrique (7).

3. Souffleur selon l'une quelconque des revendications 1 ou 2, **caractérisé en ce que** l'ensemble fonctionnel central (6) comprend un passage (13) situé principalement dans le courant d'air et logeant le ou les câbles électriques (14) reliant la carte électronique (10) et le moteur électrique (7).

4. Souffleur électroportatif selon l'une quelconque des revendications 1 à 3, **caractérisé en ce que** ladite tuyère d'aspiration (2) présente, en amont du ventilateur axial (20), un coude (22) dont l'extrémité proximale délimitant l'entrée d'air (3) est orientée vers le bas, en considérant une position de travail du souffleur selon laquelle, celui-ci est dirigé vers l'avant et la poignée de manoeuvre (15) du souffleur est placée au-dessus de celui-ci.

5. Souffleur électroportatif selon la revendication 4, **caractérisé en ce que** la poignée de manoeuvre (15) du souffleur est placée au dessus de la partie centrale (5) renfermant l'ensemble, fonctionnel (6), en considérant une position de travail du souffleur selon laqu,elle, celui-ci est dirigé vers t'avant.

6. Souffleur électroportatif selon l'une quelconque des revendications 4 ou 5, **caractérisé en ce que** la poignée de manoeuvre (15) du souffleur est placée sensiblement au dessus du centre de gravité G de l'outil.

7. Souffleur électroportatif selon l'une quelconque des revendications 1 à 6, **caractérisé en ce que** l'ensemble fonctionnel (6) comprend, d'une part, un carter extérieur (17) de forme générale cylindrique, un carter cylindrique intérieur (18) de diamètre plus réduit et disposé axialement dans ledit carter extérieur, lesdits carters extérieur (17) et intérieur (18) étant reliés par des ailettes radiales ou redresseurs (9) délimitant une pluralité de canaux (19) de circulation d'air de refroidissement disposés entre lesdits carters et s'étendant parallèlement à l'axe de ces derniers et, d'autre part, un ventilateur axial (20) dont l'hélice (8) est entraînée en rotation par un moteur électrique (7) logé dans le carter intérieur (18), **caractérisé en ce que** le carter extérieur (17), le carter intérieur (18) et les redresseurs (9) reliant lesdits carters sont réalisés d'une seule pièce dans un matériau bon conducteur de chaleur.

8. Souffleur électroportatif selon la revendication 7, **caractérisé en ce que** le carter extérieur (17) comporte une platine ou embase (21) en contact avec ledit carter extérieur (17) et sur laquelle est fixée une carte électronique (10) destinée à assurer la gestion de l'outil et la commande du moteur.

9. Souffleur électroportatif selon la revendication 8, **caractérisé en ce que** la platine (21) de réception de la carte électronique (10) est réalisée d'une seule pièce avec l'ensemble constitué par le carter extérieur (17), le carter intérieur (18) et les redresseurs (9).

10. Souffleur électroportatif selon l'une quelconque des revendications 7 à 9, **caractérisé en ce que** les pales (8a) de l'hélice axiale (8) et les ailettes radiales (9) de redressement sont courbées en sens inverse.

11. Souffleur électroportatif selon l'une quelconque des revendications 7 à 10, **caractérisé en ce que** les redresseurs (9) et les canaux (19) de circulation d'air délimités par ces redresseurs ont une longueur correspondant sensiblement à la longueur du carter intérieur (18) renfermant le moteur (7) du ventilateur axial (20).

12. Souffleur électroportatif selon l'une quelconque des revendications 7 à 11, **caractérisé en ce que** l'ensemble monobloc constitué par le carter extérieur (17), le carter intérieur (18), les redresseurs (9) et la platine (21), est exécuté en magnésium, ou en aluminium, ou en matière composite ou en matière plastique possédant de bonnes propriétés de conductivité thermique.

13. Souffleur électroportatif selon l'une quelconque des revendications 7 à 12, **caractérisé en ce que** l'ensemble constitué par le carter extérieur (17), le carter intérieur (18), les redresseurs (9) et la platine ou embase (21) est obtenu d'une seule pièce par un procédé de moulage ou par un procédé d'injection de précision.

14. Souffleur électroportatif selon l'une quelconque des revendications 5 à 13, **caractérisé en ce que** la poignée (15) est pourvue d'une carte électronique secondaire (32) reliée à la carte électronique de gestion de l'outil et de commande du moteur (10).

15. Souffleur électroportatif selon la revendication 14, comportant une gâchette (34) commandant le fonctionnement et l'arrêt de l'outil, **caractérisé en ce que** la carte électronique secondaire (32) est configurée pour analyser la position de la gâchette (34).

16. Souffleur électroportatif selon la revendication 15, **caractérisé en ce que** la mesure de la position de la gâchette (34) utilise un aimant à champ orienté et un capteur magnéto résistif.

17. Souffleur électroportatif selon l'une quelconque des revendications 14 à 16, **caractérisé en ce que** la carte électronique secondaire (32) comporte un sélecteur de vitesse et un dispositif d'affichage de la vitesse sélectionnée.

18. Souffleur électroportatif selon la revendication 17, **caractérisé en ce que** le sélecteur de vitesse comprend un capteur à effet Hall présent sur la carte électronique secondaire (32) et un aimant fixé sur le bouton ou autre organe de commande de ce sélecteur de vitesse.

19. Souffleur électroportatif selon l'une des revendications 5 ou 6, **caractérisé en ce que** la poignée (15) est constituée par l'assemblage de deux demi coques (30, 31).

20. Souffleur électroportatif selon la revendication 19, **caractérisé en ce que** la fixation de l'ensemble des trois parties proximale (2), centrale (5) et distale (4) constituant le conduit (1) est assuré par l'assemblage des deux demi coques (30, 31).

21. Souffleur électroportatif selon l'une quelconque des revendications 1 à 20, **caractérisé en ce qu'**elle comporte un cordon d'alimentation électrique (16) reliant la carte électronique de gestion de l'outil et de commande du moteur (10) à la batterie (B) et **en ce que** ce cordon électrique comporte un connecteur de connexion/déconnexion rapide au niveau de l'outil.

22. Souffleur électroportatif selon l'une quelconque des revendications 1 à 21, **caractérisé en ce que** son alimentation électrique est assurée par une batterie de forte capacité portée par l'utilisateur.

23. Souffleur électroportatif selon la revendication 22, **caractérisé en ce que** la batterie est constituée par une batterie Lithium-Ion ou Lithium-Polymère.

## Patentansprüche

1. Autonomes tragbares elektrisches Gebläse, umfassend wenigstens einen Propeller (8) zum Erzeugen einer Luftströmung, der von einem von einer Stromquelle gespeisten Elektromotor angetrieben wird, wobei das Gebläse mit einem Luftführungskanal (1), bestehend aus drei aufeinanderfolgenden rohrförmigen Abschnitten von im allgemeinen zylindrischer Form, nämlich einen proximalen Abschnitt oder einer Saugdüse (2) mit einem Lufteinlass (3), einem distalen Abschnitt des Luftauslasses oder einer Ausströmdüse (4) und einen zentralen oder mittleren Teil (5) versehen ist,
wobei im zentralen Teil die folgenden Funktionsbaugruppen in dem zentralen Abschnitt (5) des Luftführungskanals (1) angeordnet sind:
- einen elektronisch kommutierbaren Elektromotor (7);
- mindestens einen durch den Elektromotor in Rotation versetzbaren Axialpropeller (8), der mit letzteren einen Axiallüfter (20) bildet;
- einen Luftrichter (9);
- eine elektronische Steuerschaltung (10) zum Steuern und Regeln des Motors, wobei die genannte funktionelle Anordnung in dem zentralen bzw. mittleren Abschnitt des Luftführungskanal angeordnet ist und mit diesem in Kontakt steht, **dadurch gekennzeichnet, dass** der Mittelabschnitt als ein von den beiden anderen Abschnitten separates Teil zusammengesetzt ist, um eine Funktionseinheit (6) oder eine integrale Anordnung einer Vielzahl von Elementen zu bilden und aus einem gut wärmeleitenden Material hergestellt ist.

2. Tragbares elektrisches Gebläse nach Anspruch 1, **dadurch gekennzeichnet, dass** die Funktionseinheit (6) ferner die folgenden Funktionsbaugruppen enthält:
- eine aerodynamischer Lufteinlasskonus (11), der koaxial stromaufwärts des Propellers (8) angebracht ist; und / oder
- einen aerodynamische Luftauslasskegel (12), der koaxial stromabwärts von dem Elektromotor (7) angeordnet ist.

3. Gebläse nach einem der Ansprüche 1 oder 2, **dadurch gekennzeichnet, dass** die zentrale Funktionseinheit (6) einen im Wesentlichen in dem Luftstrom befindlichen Durchgang (13) aufweist und das Gehäuse oder die elektrischen Kabel (14) aufnimmt, die mit der Steuerschaltung (10) und dem Elektromotor (7) verbunden sind.

4. Tragbares elektrisches Gebläse nach einem der Ansprüche 1 bis 3, **dadurch gekennzeichnet, dass** die Saugdüse (2) stromaufwärts zu dem Axialventilator (20) einen Krümmer (22) aufweist, wobei dessen proximales Ende den Lufteinlass (3) begrenzt,und während einer Arbeitsstellung des Gebläses nach unten gerichtet ist, wobei dieses nach Vorne gerichtet ist und der Betätigungsgriff (15) des Gebläses oberhalb diesem platziert ist.

5. Tragbares elektrisches Gebläse nach Anspruch 4, **dadurch gekennzeichnet, dass** der Betätigungsgriff (15) des Gebläses über dem Mittelteil (5), in welcher die Funktionseinheit (6) untergebracht ist, angeordnet ist, während einer Betriebsstellung bei der das Gebläses nach vorne gerichtet ist.

6. Tragbares elektrisches Gebläse nach einem der Ansprüche 4 oder 5, **dadurch gekennzeichnet, dass** der Betätigungsgriff (15) des Gebläses im Wesentlichen über dem Schwerpunkt G des Werkzeugs angeordnet ist.

7. Tragbares elektrisches Gebläse nach einem der Ansprüche 1 bis 6, **dadurch gekennzeichnet, dass** die Funktionseinheit (6) einerseits ein äußeres Gehäuse (17) von allgemein zylindrischer Form, einen inneren zylindrischen Mantel (18) mit kleinerem Durchmesser aufweist, der axial an dem Außengehäuse angeordnet ist, wobei das äußere Gehäuse (17) und der innere Mantel (18) über radiale Rippen oder Gleichrichter (9) verbunden sind und eine Vielzahl von Kanälen (19) für die Luftströmung eingrenzen, die zwischen den besagten Gehäusen vorgesehen sind und sich parallel zu deren Achse erstrecken, und andererseits einen Axiallüfter (20) in dem Innengehäuse aufweist, dessen Propeller (8) durch einen elektrischen Motor (7) drehend angetrieben wird, **dadurch gekennzeichnet, dass** das äußere Gehäuse (17), der innere Mantel (18) und die die genannten Gehäuse verbindenden Rippen (9) einstückig aus einem gut wärmeleitenden Material gebildet sind.

8. Tragbares elektrisches Gebläse nach Anspruch 7, **dadurch gekennzeichnet, dass** das äußere Gehäuse (17) eine Platte oder Basis (21) aufweist, die in Kontakt mit dem äußeren Gehäuse (17) ist und auf dem eine Leiterplatte (10) befestigt ist, ausgebildet um die Bedienung der Werkzeuges und die Motorsteuerung sicherzustellen.

9. Tragbares elektrisches Gebläse nach Anspruch 8, **dadurch gekennzeichnet, dass** die Platte (21) zur Aufnahme der elektronischen Karte (10) einstückig mit der Anordnung ausgebildet ist, die aus dem äußeren Gehäuse (17), dem Innengehäuse (18) und den Rippen (9) besteht.

10. Tragbares elektrisches Gebläse nach einem der Ansprüche 7 bis 9, **dadurch gekennzeichnet, dass** die Flügel (8a) des axialen Propellers (8) und die radialen Rippen (9) in umgekehrter Richtung gekrümmt verlaufen

11. Tragbares elektrisches Gebläse nach einem der Ansprüche 7 bis 10, **dadurch gekennzeichnet, dass** die Rippen (9) und die von diesen begrenzten und für den Luftstrom bestimmten Kanäle (19) eine Länge aufweisen, die im Wesentlichen der Länge des inneren Mantels (18) entspricht, der den Motor (7) des Axiallüfters (20) umgibt.

12. Tragbares elektrisches Gebläse nach einem der Ansprüche 7 bis 11, **dadurch gekennzeichnet, dass** die einteilige Baugruppe bestehend aus dem äußeren Gehäuse (17), dem inneren Mantel (18), den Rippen (9) und der Platte (21) aus Magnesium oder Aluminium, oder einem Verbundmaterial oder Kunststoffmaterial mit guten Wärmeleiteigenschaften hergestellt ist.

13. Tragbares elektrisches Gebläse nach einem der Ansprüche 7 bis 12, **dadurch gekennzeichnet, dass** die Anordnung, aus dem Außengehäuse (17), dem inneren Mantel (18) und den Rippen (19) in einem Stück durch ein Formverfahren oder durch eine Präzisionsspritzgussverfahren erhalten wird.

14. Tragbares elektrisches Gebläse nach einem der Ansprüche 5 bis 13, **dadurch gekennzeichnet, dass** der Griff (15) mit einer zweiten Elektronikplatine (32) versehen ist, die mit der Schaltungsanordnung zur Bedienung und Steuerung des Motors (10) verbunden ist.

15. Tragbares elektrisches Gebläse nach Anspruch 14, umfassend einen Drücker (34) die Inbetriebnahme und das Stoppen des Werkzeugs ermöglicht, **dadurch gekennzeichnet, dass** die sekundäre Leiterplatte (32) konfiguriert ist, um die Position des Drückers (34) zu erfassen.

16. Tragbares elektrisches Gebläse nach Anspruch 15, **dadurch gekennzeichnet, dass** für die Messung der Position des Drückers (34) ein orientiertes Magnetfeld sowie ein magneto-resistiver Sensor verwendet wird.

17. Tragbares elektrisches Gebläse nach einem der Ansprüche 14 bis 16, **dadurch gekennzeichnet, dass** die sekundäre Leiterplatte (32) einen Geschwindigkeitswahlschalter und eine Geschwindigkeitsanzeige der ausgewählten Geschwindigkeit aufweist.

18. Tragbares elektrisches Gebläse nach Anspruch 17, **dadurch gekennzeichnet, dass** der Geschwindigkeitswahlschalter eine Hall-Effekt-Sensor auf der sekundären Leiterplatte (32) umfasst sowie einen Magneten, der auf dem Drücker oder einem anderen Steuerglied des Geschwindigkeitsauswahlschalters befestigt ist.

19. Tragbares elektrisches Gebläse nach einem der Ansprüche 5 oder 6, **dadurch gekennzeichnet, dass** der Griff (15) durch Zusammenfügen von zwei Halbschalen (30, 31) gebildet ist.

20. Tragbares elektrisches Gebläse nach Anspruch 19, **dadurch gekennzeichnet, dass** die Befestigung des proximalen Abschnittes (2), des zentralen Abschnittes (5) und distalen Abschnittes (4) des Kanals (1) durch die Anordnung von zwei vorgesehenen Halbschalen (30, 31) sichergestellt wird

21. Tragbares elektrisches Gebläse nach einem der Ansprüche 1 bis 20, **dadurch gekennzeichnet, dass** ein Anschlusskabel (16) vorgesehen ist, mit dem die elektronischen Karte (10) zum Bedienen und Steuerung des Motors mit der Batterie (B) verbunden ist und dass diese Kabel einen am Werkzeug schnell zu verbindenden und trennenden Stecker aufweist.

22. Tragbares elektrisches Gebläse nach einem der Ansprüche 1 bis 21, **dadurch gekennzeichnet, dass** dessen elektrische Versorgung durch eine Batterie mit einer hohen Kapazität sichergestellt wird, die von dem Benutzer getragen wird.

23. Tragbares elektrisches Gebläse nach Anspruch 22, **dadurch gekennzeichnet, dass** die Batterie eine Lithium-Ionen -oder Li-Polymerbatterie ist.

## Claims

1. A self-contained portable electric blower comprising at least one impeller (8) generating an air flow and driven by an electric motor powered by a current source, said blower comprising an air guide conduit (1) formed by a succession of three tubular portions of general cylindrical shape, namely a proximal portion or suction nozzle (2) provided with an air inlet (3), a distal air outlet portion or discharge nozzle (4) and a central or intermediate portion (5), said central portion comprising the following functional sub-assemblies accommodated in said central portion (5) of said air guide conduit (1):
- an electric motor with electronic commutation (7);
- at least one axial impeller (8) driven in rotation by the electric motor and constituting with the latter an axial fan (20);
- air rectifiers (9); and
- an electronic board (10) for management of the tool and control of the motor,
said functional assembly being accommodated in the central or intermediate portion of said air guide conduit with which it is in contact, **characterised in that** the central portion is a part distinct from the other two and is arranged to constitute a functional assembly (6) which is in one piece or is formed by assembling a plurality of elements and made of a material which is a good conductor of heat.

2. A portable electric blower according to claim 1 **characterised in that** the functional assembly (6) further comprises the following functional sub-assemblies:
- an aerodynamic air inlet cone (11) disposed coaxially upstream of the impeller (8); and/or
- an aerodynamic air outlet cone (12) disposed coaxially downstream of the electric motor (7).

3. A blower according to either one of claims 1 and 2 **characterised in that** the central functional assembly (6) comprises a passage (13) disposed primarily in the air flow and accommodating the electric cable or cables (14) connecting the electronic board (10) and the electric motor (7).

4. A portable electric blower according to any one of claims 1 to 3 **characterised in that** said suction nozzle (2) has upstream of the axial fan (20) an elbow bend (22) of which the proximal end delimiting the air inlet is directed downwardly, considering a working position of the blower in which it is directed forwardly and the operating handle (15) of the blower is disposed above it.

5. A portable electric blower according to claim 4 **characterised in that** the operating handle (15) of the blower is placed above the central portion (5) containing the functional assembly (6), considering a working position of the blower in which it is directed forwardly.

6. A portable electric blower according to either one of claims 4 and 5 **characterised in that** the operating handle (15) of the blower is placed substantially above the centre of gravity G of the tool.

7. A portable electric blower according to any one of claims 1 to 6 **characterised in that** the functional assembly (6) comprises on the one hand an outer casing (17) of general cylindrical shape, an inner cylindrical casing (18) of smaller diameter and disposed axially in said outer casing, said outer (17) and inner (18) casings being connected by radial ribs or rectifiers (9) delimiting a plurality of cooling air circulation passages (19) disposed between said casings and extending in parallel relationship with the axis of the latter and on the other hand an axial fan (20) of which the impeller (8) is driven in rotation by an electric motor (7) accommodated in the inner casing (18), **characterised in that** the outer casing (17), the inner casing (18) and the rectifiers (9) connecting said casings are made in one piece of a material which is a good conductor of heat.

8. A portable electric blower according to claim 7 **characterised in that** the outer casing (17) comprises a plate or base portion (21) in contact with said outer casing (17) and on which is fixed an electronic board (10) intended to implement management of the tool and control of the motor.

9. A portable electric blower according to claim 8 **characterised in that** the plate portion (21) receiving the electronic board (10) is made in one piece with the assembly formed by the outer casing (17), the inner casing (18) and the rectifiers (9).

10. A portable electric blower according to any one of claims 7 to 9 **characterised in that** the blades (8a) of the axial impeller (8) and the radial rectifying ribs (9) are curved in opposite directions.

11. A portable electric blower according to any one of claims 7 to 10 **characterised in that** the rectifiers (9) and the air circulation passages (19) delimited by said rectifiers are of a length substantially corresponding to the length of the inner casing (18) containing the motor (7) of the axial fan (20).

12. A portable electric blower according to any one of claims 7 to 11 **characterised in that** the one-piece assembly formed by the outer casing (17), the inner casing (18), the rectifiers (9) and the plate portion (21) is made of magnesium or aluminium or composite material or plastic material having good thermal conductivity properties.

13. A portable electric blower according to any one of claims 7 to 12 **characterised in that** the assembly formed by the outer casing (17), the inner casing (18), the rectifiers (9) and the plate or base portion (21) is obtained in one piece by a moulding process or by a precision injection process.

14. A portable electric blower according to any one of claims 5 to 13 **characterised in that** the handle (15) is provided with a secondary electronic board (32) connected to the electronic board for management of the tool and for control of the motor (10).

15. A portable electric blower according to claim 14 comprising a trigger (34) controlling functioning and stopping of the tool, **characterised in that** the secondary electronic board (32) is configured to analyse the position of the trigger (34).

16. A portable electric blower according to claim 15 **characterised in that** measurement of the position of the trigger (34) uses a field-oriented magnet and a magnetoresistive sensor.

17. A portable electric blower according to any one of claims 14 to 16 **characterised in that** the secondary electronic board (32) comprises a speed selector and a device for displaying the selected speed.

18. A portable electric blower according to claim 17 **characterised in that** the speed selector comprises a Hall effect sensor present on the secondary electronic board (32) and a magnet fixed on the button or other member for controlling said speed selector.

19. A portable electric blower according to either one of claims 5 and 6 **characterised in that** the handle (15) is formed by the assembly of two half shells (30, 31).

20. A portable electric blower according to claim 19 **characterised in that** the fixing of the assembly of the three proximal (2), central (5) and distal (4) portions forming the conduit (1) is effected by assembling the two half shells (30, 31).

21. A portable electric blower according to any one of claims 1 to 20 **characterised in that** it comprises an electric power cable (16) connecting the electronic board for management of the tool and for controlling the motor (10) to the battery (B) and that the electric cable comprises a quick-action connection/disconnection connector on the tool.

22. A portable electric blower according to any one of claims 1 to 21 **characterised in that** its electric power supply is ensured by a high-capacity battery carried by the operator.

23. A portable electric blower according to claim 22 **characterised in that** the battery is formed by a lithium-ion or lithium-polymer battery.
